# EUROPÄISCHE PATENTANMELDUNG

(11) **EP 4 461 450 A1**
(43) Veröffentlichungstag der Anmeldung: **13.11.2024**
(21) Anmeldenummer: 23173215.7
(22) Anmeldetag: 12.05.2023
(51) Int. Cl.: B23F 21/00, B23F 21/02, B24D 18/00, B24D 5/14

(54) **SCHLEIFSCHNECKE, VERFAHREN ZUR HERSTELLUNG EINER SCHLEIFSCHNECKE SOWIE VERWENDUNG EINER SCHLEIFSCHNECKE**

(71) Anmelder: Klingelnberg AG, 8050 Zürich (CH)
(72) Erfinder: Stramm, Sebastian, 50825 Köln (DE)
(74) Vertreter: Janke Scholl Patentanwälte PartG mbB

(57) **Zusammenfassung**

Schleifschnecke, wobei die Schleifschnecke (10) eine abrichtbare Schleifschnecke ist, wobei ein erster Abschnitt (12) der Schleifschnecke (10) erstes Schleifkorn (14) aufweist, das in einen Matrixwerkstoff (16) eingebunden ist, wobei ein zweiter Abschnitt (18) der Schleifschnecke (10) zweites Schleifkorn (20) aufweist, das in den Matrixwerkstoff (16) eingebunden ist, wobei das erste Schleifkorn (14) und das zweite Schleifkorn (20) sich bezüglich der Korngröße und/oder des Kornmaterials voneinander unterscheiden, wobei zwischen dem ersten Abschnitt (12) und dem zweiten Abschnitt (18) ein Übergangsabschnitt (22) gebildet ist, in dem sowohl erstes Schleifkorn (14) als auch zweites Schleifkorn (20) in den Matrixwerkstoff (16) eingebunden sind, wobei der erste Abschnitt (12), der zweite Abschnitt (18) und der Übergangsabschnitt (22) den gleichen Matrixwerkstoff (16) aufweisen und wobei in dem Übergangsabschnitt (22) zumindest abschnittsweise eine Durchmischung des ersten Schleifkorns (14) und des zweiten Schleifkorns (20) gebildet ist.

## Beschreibung

Die vorliegende Erfindung betrifft eine Schleifschnecke und ein Verfahren zu Herstellung einer solchen Schleifschnecke sowie die Verwendung einer solchen Schleifschnecke.

Schleifschnecken werden dazu verwendet, Zahnräder im kontinuierlichen Verzahnverfahren des Wälzschleifens schleifend zu bearbeiten. Ein klassisches Beispiel von Zahnrädern, die durch Wälzschleifen feinbearbeitet werden können, sind beispielsweise geradverzahnte oder schrägverzahnte Stirnräder.

Das Wälzschleifen selbst kann in mehreren Schritten erfolgen, wobei zunächst in einem ersten Überlauf ein größerer Materialabtrag erfolgt, dem sogenannten Schruppen bzw. Schruppschleifen, wobei anschließend, in einem oder mehreren weiteren Überläufen, ein geringerer Materialabtrag erfolgt, dem sogenannten Schlichten bzw. Schlichtschleifen. Je nach geforderter Qualität kann bezüglich des Schlichtens zwischen Feinschleifen und Polierschleifen unterschieden werden.

Es ist ersichtlich, dass für das Schruppschleifen ein gröberes Schleifkorn verwendet werden kann, als es für das Feinschleifen der Fall ist. Um nicht für jeden Arbeitsschritt eine eigene Schleifschnecke mit dem entsprechend erforderlichen Schleifkorn vorhalten zu müssen, ist es bekannt, Schleifschnecken zu verwenden, die sowohl ein grobes Schleifkorn als auch ein feines Schleifkorn aufweisen. Diese Schleifschnecken werden z.B. derart bereitgestellt, dass eine erstes Modul der betreffenden Schleifschnecke ein grobes Schleifkorn mit keramischer Bindung aufweist und ein zweites Modul der Schleifschnecke ein feines Schleifkorn mit Kunstharzbindung aufweist. Die beiden Module sind beispielsweise miteinander verklebt, um auf diese Weise eine Schleifschnecke mit zwei verschiedenen Körnungen bereitzustellen. Jedes der beiden Module wird jedoch zunächst separat und unabhängig von dem weiteren Modul hergestellt. Mit anderen Worten handelt es sich um zwei separate Schleifschnecken unterschiedlicher Körnung, die zu einer Schleifschnecke zusammengefügt worden sind.

Derartige Schleifschnecken sind daher aufwendig in ihrer Herstellung, wobei die Verbindungsstelle zwischen den beiden Modulen eine Schwachstelle darstellt, die während der Verwendung der betreffenden Schleifschnecke oder während des Abrichtens über die Verbindungsstelle hinweg zu Defekten führen kann.

Vor diesem Hintergrund liegt der vorliegenden Erfindung die technische Problemstellung zugrunde, eine verbesserte Schleifschnecke mit mindestens zwei Körnungen bzw. mit mindestens zwei Bereichen mit unterschiedlichem Abtragverhalten anzugeben, die insbesondere kostengünstig herstellbar ist und zudem über ihrer gesamten Lebensdauer robust ist - und zwar sowohl während des Schleifens als auch während des Abrichtens. Weiter soll ein Verfahren zum Herstellen und zur Verwendung einer solchen Schleifschnecke angegeben werden.

Die voranstehend beschriebene technische Problemstellung wird jeweils durch die unabhängigen Ansprüche gelöst. Weitere Ausgestaltungen der Erfindung ergeben sich aus den abhängigen Ansprüchen und der nachstehenden Beschreibung.

Gemäß einem ersten Aspekt betrifft die Erfindung eine Schleifschnecke, wobei die Schleifschnecke eine abrichtbare Schleifschnecke ist, wobei ein erster Abschnitt der Schleifschnecke erstes Schleifkorn aufweist, das in einen Matrixwerkstoff eingebunden ist, wobei ein zweiter Abschnitt der Schleifschnecke zweites Schleifkorn aufweist, das in den Matrixwerkstoff eingebunden ist, wobei das erste Schleifkorn und das zweite Schleifkorn sich bezüglich der Korngröße und/oder des Kornmaterials und/oder der Form voneinander unterscheiden, wobei zwischen dem ersten Abschnitt und dem zweiten Abschnitt ein Übergangsabschnitt gebildet ist, in dem sowohl erstes Schleifkorn als auch zweites Schleifkorn in den Matrixwerkstoff eingebunden sind, wobei der erste Abschnitt, der zweite Abschnitt und der Übergangsabschnitt den gleichen Matrixwerkstoff aufweisen und wobei in dem Übergangsabschnitt zumindest abschnittsweise eine Durchmischung des ersten Schleifkorns und des zweiten Schleifkorns gebildet ist.

Der erste Abschnitt und der zweite Abschnitt sind insbesondere durch Urformen miteinander verbunden worden, sodass der Übergangsabschnitt eine stoffschlüssige Verbindung des ersten Abschnitts mit dem zweiten Abschnitt ausbildet. Mit anderen Worten sind der erste Abschnitt, der zweite Abschnitt und der Übergangsabschnitt einstückig als einteiliger Rohling durch Urformen bereitgestellt worden, sodass zwischen dem ersten Abschnitt und dem zweiten Abschnitt keine Fügestelle und keine Klebestelle gebildet ist.

Die in erfindungsgemäßer Weise ausgebildete Schleifschnecke ist daher insbesondere kostengünstig herstellbar und zudem über ihrer gesamten Lebensdauer robust - und zwar sowohl während des Schleifens als auch während des Abrichtens. Dies kann insbesondere dadurch erreicht werden, dass sowohl das erste Schleifkorn als auch des zweite Schleifkorn in ein und denselben Matrixwerkstoff urformend eingebettet sind.

Wenn vorliegend von einer Korngröße des Schleifkorns gesprochen wird, so handelt es sich dabei insbesondere um eine mittlere Korngröße, wobei die mittlere Korngröße insbesondere durch einen Korngrößenbereich definiert sein kann. Beispielsweise kann vorgesehen sein, dass eine mittlere Korngröße des ersten Schleifkorn in einem Bereich von 0,06 mm - 0,12 mm liegt, während eine mittlere Korngröße des zweiten Schleifkorns in einem Bereich von 0,14 mm bis 0,22 mm liegt. Das zweite Schleifkorn ist in diesem Fall daher ein gröberes Schleifkorn, während das erste Schleifkorn ein im Vergleich dazu feineres Schleifkorn ist.

Gemäß einer Ausgestaltung der Schleifschnecke ist vorgesehen, dass die erste Abschnitt ein gröberes Schleifkorn aufweist als der zweite Abschnitt - oder umgekehrt.

Das erste Schleifkorn kann ein Schleifkorngemisch sein. Das zweite Schleifkorn kann ein Schleifkorngemisch sein.

Das erste Schleifkorn kann aus Korund bzw. Aluminiumoxid bestehen.

Das erste Schleifkorn kann aus Siliziumkarbid bestehen.

Das erste Schleifkorn kann aus kubischem Bornitrid bestehen. Das erste Schleifkorn kann aus synthetischem Diamant bestehen.

Das erste Schleifkorn kann eine Mischung von Schleifkörnern bestehend aus zwei oder mehr der vorgenannten Materialien aufweisen.

Das zweite Schleifkorn kann aus Korund bzw. Aluminiumoxid bestehen.

Das zweite Schleifkorn kann aus Siliziumkarbid bestehen. Das zweite Schleifkorn kann aus kubischem Bornitrid bestehen.

Das zweite Schleifkorn kann aus synthetischem Diamant bestehen.

Das zweite Schleifkorn kann eine Mischung von Schleifkörner bestehend aus zwei oder mehr der vorgenannten Materialien aufweisen.

Es kann vorgesehen sein, dass die Schleifschnecke eine keramisch gebundene Schleifschnecke ist. Dementsprechend ist der Matrixwerkstoff eine keramische Bindung.

Der Matrixwerkstoff kann eines oder mehrere der nachfolgenden Materialien aufweisen: Ton, Kaolin, Feldspat, Quarz und Porzellanmehl, Kalkspat, Eisenoxid, Glasfritten. Der Matrixwerkstoff kann z.B. eine amorphe Bindung, d.h. eine Schmelzbindung mit hohem Glasphasenanteil sein oder kann z.B. eine Bindung mit mittlerem Glasphasenanteil sein oder kann z.B. eine porzellanartig sinternde Bindungen, d.h. eine Sinterbindung, mit geringem oder keinem Glasphasenanteil sein.

Gemäß alternativer Ausgestaltungen kann vorgesehen sein, dass die Schleifschnecke eine Kunstharzbindung als Matrixwerkstoff aufweist.

Das erste Schleifkorn und/oder das zweite Schleifkorn können sich hinsichtlich ihrer Form voneinander unterscheiden, wobei das erste Schleifkorn und das zweite Schleifkorn insbesondere jeweils eine unterschiedliche Form bzw. Gestalt aufweisen können, ausgewählt aus: Hexaeder, Rhomboeder, Tetraeder, Oktaeder, Pyramide, Trapezoeder, Prisma.

Der erste Abschnitt und der zweite Abschnitt können sich hinsichtlich ihres Porenanteils voneinander unterscheiden. So kann der erste Abschnitt einen größeren Porenanteil aufweise als der zweite Abschnitt - oder umgekehrt.

Der erste Abschnitt und der zweite Abschnitt können sich hinsichtlich ihrer Porengröße voneinander unterscheiden. So kann der erste Abschnitt größere Poren aufweise als der zweite Abschnitt - oder umgekehrt.

Die Schleifschnecke ist insbesondere keine galvanisch belegte Schleifschnecke.

Es kann vorgesehen sein, dass der erste Abschnitt eine erste abgerichtete Profilform aufweist und der zweite Abschnitt eine zweite abgerichtete Profilform aufweist, wobei sich die Geometrie der ersten abgerichteten Profilform von der Geometrie der zweiten abgerichteten Profilform unterscheidet, wobei die Schleifschnecke zum topologischen Schleifen einer Verzahnung eingerichtet ist.

Der Begriff "topologisches Schleifen" umfasst erfindungsgemäß sowohl das Erzeugen klassischer Modifikationen der Verzahnung, wie Rücknahmen im Bereich des Zahnkopfs, des Zahnfußes oder der Zahnenden, Balligkeiten in Profil- und/oder Flankenrichtung oder auch Winkelmodifikationen in Profil- und/oder Flankenrichtung als auch eine Superposition klassischer Modifikationen. Der Begriff "topologische Schleifen" umfasst erfindungsgemäß zudem das Erzeugen von Modifikationen der Verzahnung, wobei Zahnflanken der Verzahnung als Gitter bzw. Freiformfläche betrachtet und Modifikationswerte anhand von Stützstellen auf diesem Gitter frei vorgegeben werden. So lassen sich beliebig modifizierte Flankenformen definieren, die nicht durch einen vorgegebenen Katalog vordefinierter Verzahnungsmodifikationen beschränkt sind. Der Begriff "beliebig modifizierte Flankenformen" ist vor diesem Hintergrund auf Flankenformen beschränkt, die eine lauffähige Verzahnung ermöglichen.

Gemäß einem zweiten Aspekt betrifft die Erfindung ein Verfahren, mit den Verfahrensschritten: Bereitstellen von erstem Schleifkorn; Bereitstellen von zweitem Schleifkorn; Bereitstellen eines Matrixwerkstoffs; Mischen des ersten Schleifkorns mit dem Matrixwerkstoff zu einer ersten Mischung; Mischen des zweiten Schleifkorns mit dem Matrixwerkstoff zu einer zweiten Mischung; Schichten der ersten Mischung und der zweiten Mischung in einer Form; Pressen der ersten Mischung und der zweiten Mischung innerhalb der Form und Sintern der ersten und zweiten Mischung zu einem zylindrischen Rohling; Herstellung einer Schleifschnecke durch Profilieren des Rohlings; wobei die Schleifschnecke erfindungsgemäß ausgebildet ist.

Nach dem Pressen entsteht ein Grünling, der zunächst getrocknet und anschließend durch Wärmeeintrag zu dem Rohling gebrannt bzw. gesintert werden kann. Der Matrixwerkstoff kann flüchtige Stoffe oder Porenbildner aufweisen, die beim Brennen ausgasen oder verbrennen bzw. oxidiert werden.

Gemäß einem dritten Aspekt betrifft die Erfindung ein Verfahren, mit den Verfahrensschritten: Bereitstellen einer erfindungsgemäßen Schleifschnecke; Bereitstellen eines Bauteils, das eine zu schleifende Verzahnung aufweist; Schleifen der Flanken der Verzahnung mittels des ersten Abschnitts; Schleifen der Flanken der Verzahnung mittels des zweiten Abschnitts.

Es kann vorgesehen sein, dass der erste Abschnitt der Schleifschnecke eine erste abgerichtete Profilform aufweist und der zweite Abschnitt der Schleifschnecke eine zweite abgerichtete Profilform aufweist, wobei sich die Geometrie der ersten abgerichteten Profilform von der Geometrie der zweiten abgerichtete Profilform unterscheidet, wobei die Schleifschnecke zum topologischen Schleifen der Verzahnung eingerichtet ist und das Schleifen der Flanken der Verzahnung ein topologisches Schleifen ist.

Nachfolgend wird die Erfindung anhand einer Ausführungsbeispiele darstellenden Zeichnung näher beschrieben. Es zeigen jeweils schematisch:
- Fig. 1: eine erfindungsgemäße Schleifschnecke;
- Fig. 2: eine Form zum Sintern;
- Fig. 3A: einen zylindrischen Grünling;
- Fig. 3B: einen zylindrischen, unprofilierten Rohling;
- Fig. 4: die aus dem Rohling profilierte Schleifschnecke gemäß Fig. 1;
- Fig. 5: einen Ablaufplan eines erfindungsgemäßen Schleifverfahrens;
- Fig. 6A: Schleifen mit dem ersten Abschnitt der Schleifschnecke;
- Figl. 6B: Schleifen mit dem zweiten Abschnitt der Schleifschnecke.

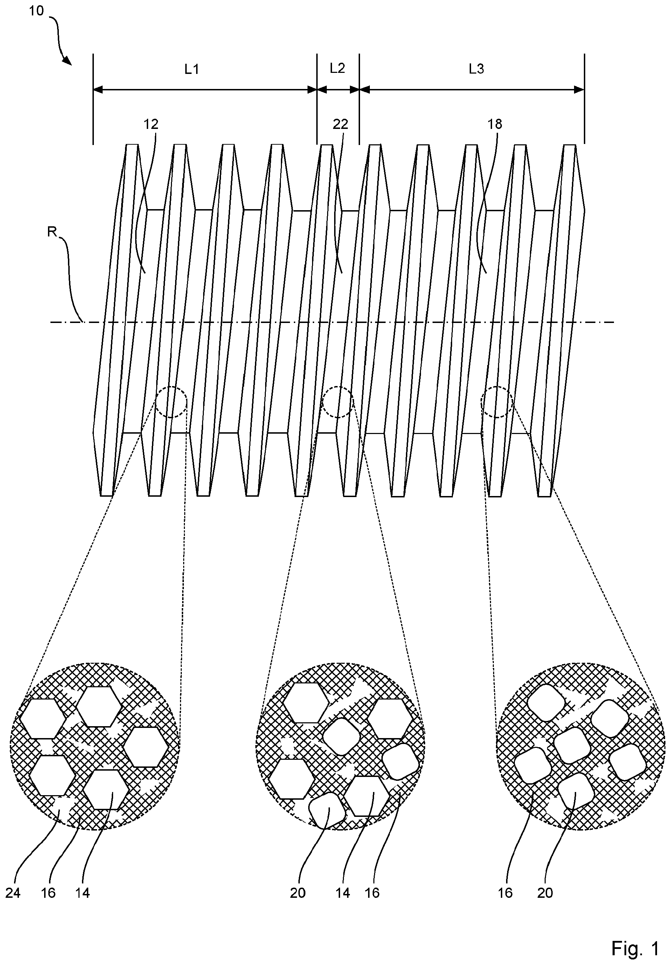

Fig. 1 zeigt eine erfindungsgemäße Schleifschnecke 10 in einer Seitenansicht.

Die Schleifschnecke 10 ist eine abrichtbare Schleifschnecke. Die Schleifschnecke 10 hat eine Rotationsachse R, um die die Schleifschnecke 10 in Betrieb drehangetrieben wird bzw. rotiert.

Ein erster Abschnitt 12 der Schleifschnecke 10 weist erstes Schleifkorn 14 auf. Das erste Schleifkorn 14 ist in einen Matrixwerkstoff 16 eingebunden.

Ein zweiter Abschnitt 18 der Schleifschnecke 10 weist zweites Schleifkorn 20 auf, das ebenfalls in den Matrixwerkstoff 16 eingebunden ist.

Das erste Schleifkorn 14 und das zweite Schleifkorn 20 unterscheiden sich voneinander bezüglich ihrer Korngröße. Vorliegend weist das zweite Schleifkorn 20 eine geringere mittlere Korngröße auf als das erste Schleifkorn 14.

Zwischen dem ersten Abschnitt 12 und dem zweiten Abschnitt 18 ist ein Übergangsabschnitt 22 gebildet. In dem Übergangsabschnitt 22 sind sowohl erstes Schleifkorn 14 als auch zweites Schleifkorn 20 in den Matrixwerkstoff 16 eingebunden.

Der erste Abschnitt 12, der zweite Abschnitt 18 und der Übergangsabschnitt 22 weisen vorliegend den gleichen Matrixwerkstoff 16 auf. In dem Übergangsabschnitt 22 ist eine Durchmischung des ersten Schleifkorns 14 und des zweiten Schleifkorns 20 gebildet.

Der erste Abschnitt 12 erstreckt sich bezüglich der Rotationsachse R betrachtet entlang einer Länge L1. Der Übergangsabschnitt 22 erstreckt sich bezüglich der Rotationsachse R betrachtet entlang einer Länge L2. Der zweite Abschnitt 18 erstreckt sich bezüglich der Rotationsachse R betrachtet entlang einer Länge L3.

Im Bereich des ersten Abschnitts 12 weist die Schleifschnecke 10 daher erstes Schleifkorn 14 und insbesondere kein zweites Schleifkorn 20 auf. Im Bereich des zweiten Abschnitts 18 weist die Schleifschnecke 10 daher zweites Schleifkorn 20 und insbesondere kein erstes Schleifkorn 14 auf.

Es versteht sich, dass es während der Fertigung der Schleifschnecke 10 dazu kommen kann, dass einzelne Körner des ersten Schleifkorns 14 in den zweiten Abschnitt 18 gelangen und dass umgekehrt einzelne Körner des zweiten Schleifkorns 20 in den Bereich des ersten Abschnitts 12 gelangen. Der erste Abschnitt 12 weist jedoch überwiegend erstes Schleifkorn 14 auf, d. h. weist beispielsweise mehr als 90 % oder mehr als 95 % erstes Schleifkorn auf, insbesondere mehr als 98 % erstes Schleifkorn auf. Der zweite Abschnitt 18 weist dementsprechend überwiegend zweites Schleifkorn 20 auf, d. h. weist beispielsweise mehr als 90 % oder mehr als 95 % zweites Schleifkorn 20 auf, insbesondere mehr als 98 % zweites Schleifkorn auf.

Die voranstehend beschriebenen prozentualen Werte beziehen sich ausschließlich auf den Schleifkornanteil des betreffenden ersten Abschnitts 12 und des betreffenden zweiten Abschnitts 18, nicht jedoch auf das gesamte Materialvolumen der betreffenden Abschnitte 12, 18. Denn die Schleifschnecke 10 setzt sich insgesamt aus Schleifkorn 14, 20, Poren 24 und Matrixwerkstoff 16 zusammen. Dieser Umstand ist in den schematisch dargestellten, vergrößerten Ansichten der Fig. 1 zu erkennen, die die Zusammensetzung und Materialverteilung der Schleifschnecke 10 in den einzelnen Bereichen 12, 18, 22 stark schematisiert verdeutlichen sollen.

Bei der Schleifschnecke 10 handelt es sich vorliegend um eine keramisch gebundene Schleifschnecke.

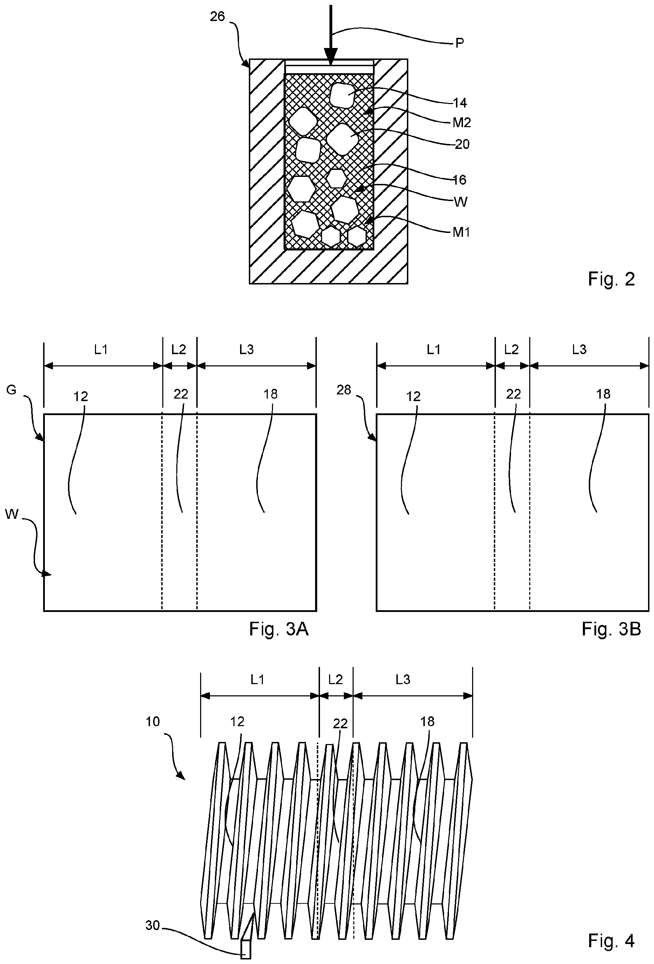

Nachfolgend wird mit Bezug zu den Figuren 2, 3A, 3B und 4 die Herstellung der erfindungsgemäßen Schleifschnecke 10 beschrieben.

Zunächst werden erstes Schleifkorn 14 und zweites Schleifkorn 20 bereitgestellt.

Das erste Schleifkorn 14 und das zweite Schleifkorn 20 werden jeweils separat und unabhängig voneinander mit Matrixwerkstoff 16 gemischt. Auf diese Weise werden durch das Mischen des ersten Schleifkorns 14 mit dem Matrixwerkstoff 16 eine erste Mischung M1 angegeben und durch das Mischen des zweiten Schleifkorns 20 mit dem Matrixwerkstoff 16 eine zweite Mischung M2 angegeben.

Anschließend wird zunächst die erste Mischung M1 in eine Form 26 eingebracht und anschließend die zweite Mischung M2 in dieselbe Form 26 eingebracht. Die erste Mischung M1 und die zweite Mischung M2 werden daher innerhalb der Form 26 geschichtet und anschließend durch eine Druckaufbringung P zu einem zylindrischen Grünling G gepresst.

Das Ergebnis des Pressens ist demnach der in Fig. 3A dargestellte zylindrische Grünling G, der bereits den ersten Abschnitt 12, den zweiten Abschnitt 18 und den Übergangsabschnitt 22 mit der entsprechenden Verteilung des Schleifkorns aufweist. Danach erfolgt das Sintern des Grünlings G zu einem zylindrischen Rohling 28 durch Einbringen von Wärme W.

Das Ergebnis des Sinterns ist der in Fig. 3B dargestellte zylindrische Rohling 28, der bereits den ersten Abschnitt 12, den zweiten Abschnitt 18 und den Übergangsabschnitt 22 mit der entsprechenden Verteilung des Schleifkorns aufweist. Die Schleifschnecke 10 wird abschließend dadurch hergestellt, dass der Rohling 28 mittels eines Werkzeugs 30 profiliert wird (Fig. 4), wobei das Werkzeug 30 z.B. ein Abrichter sein kann.

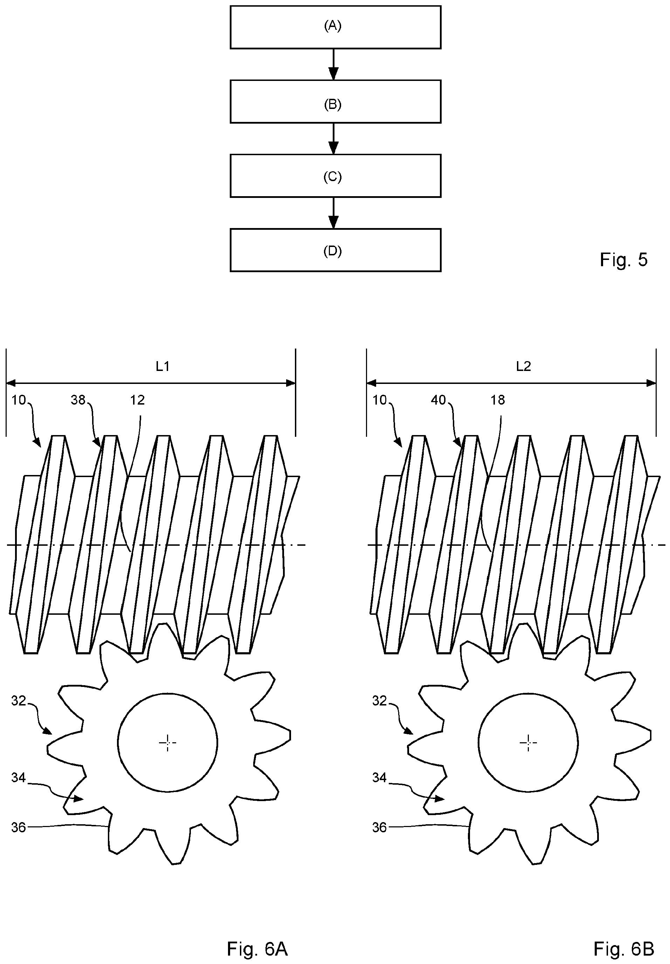

Fig. 5 zeigt schematisch einen Ablaufplan eines erfindungsgemäßen Schleifverfahrens.

In einem ersten Verfahrensschritt (A) erfolgt ein Bereitstellen der Schleifschnecke 10.

In einem zweiten Verfahrensschritt (B) erfolgt ein Bereitstellen eines Bauteils 32, das eine zu schleifende Verzahnung 34 aufweist.

In einem dritten Verfahrensschritt (C) erfolgt ein Schleifen der Flanken 36 der Verzahnung 34 mittels des ersten Abschnitts 12 des Schleifwerkzeugs 10 (Fig. 6A).

In einem vierten Verfahrensschritt (D) erfolgt ein Schleifen der Flanken 36 der Verzahnung 34 mittels des zweiten Abschnitts 18 des Schleifwerkzeugs 10 (Fig. 6B).

Der erste Abschnitt 12 weist in diesem Beispiel eine erste abgerichtete Profilform 38 auf. Der zweite Abschnitt 18 weist in diesem Beispiel eine zweite abgerichtete Profilform 40 auf, wobei sich die Geometrie der ersten abgerichteten Profilform 38 von der Geometrie der zweiten abgerichtete Profilform 40 unterscheidet.

Die Schleifschnecke 10 ist zum topologischen Schleifen der Verzahnung 34 eingerichtet und das Schleifen der Flanken 36 der Verzahnung 34 ist ein topologisches Schleifen.

Der Abschnitt 12 kann zum Schruppen eingerichtet sein. Der Abschnitt 18 kann zum Schlichten eingerichtet sein. Die Schleifschnecke 10 kann mehrere Abschnitte 18 zum Schlichten aufweisen, die jeweils eine sich voneinander unterscheidende Profilform zum topologischen Schleifen aufweisen.

### BEZUGSZEICHEN

- 10: Schleifschnecke
- 12: erster Abschnitt
- 14: erster Schleifkorn
- 16: Matrixwerkstoff
- 18: zweiter Abschnitt
- 20: zweites Schleifkorn
- 22: Übergangsabschnitt
- 24: Pore
- 26: Form
- 28: Rohling
- 30: Werkzeug
- 32: Bauteil
- 34: Verzahnung
- 36: Flanke
- 38: Profilform
- 40: Profilform
- (A): Verfahrensschritt
- (B): Verfahrensschritt
- (C): Verfahrensschritt
- (D): Verfahrensschritt
- L1: Länge
- L2: Länge
- L3: Länge
- R: Rohling
- P: Druck
- W: Wärme

## Patentansprüche

1. Schleifschnecke,
- wobei die Schleifschnecke (10) eine abrichtbare Schleifschnecke ist,
- wobei ein erster Abschnitt (12) der Schleifschnecke (10) erstes Schleifkorn (14) aufweist, das in einen Matrixwerkstoff (16) eingebunden ist,
- wobei ein zweiter Abschnitt (18) der Schleifschnecke (10) zweites Schleifkorn (20) aufweist, das in den Matrixwerkstoff (16) eingebunden ist,
- wobei das erste Schleifkorn (14) und das zweite Schleifkorn (20) sich bezüglich der Korngröße und/oder des Kornmaterials und/oder der Form voneinander unterscheiden,
- wobei zwischen dem ersten Abschnitt (12) und dem zweiten Abschnitt (18) ein Übergangsabschnitt (22) gebildet ist, in dem sowohl erstes Schleifkorn (14) als auch zweites Schleifkorn (20) in den Matrixwerkstoff (16) eingebunden sind,
- wobei der erste Abschnitt (12), der zweite Abschnitt (18) und der Übergangsabschnitt (22) den gleichen Matrixwerkstoff (16) aufweisen und
- wobei in dem Übergangsabschnitt (22) zumindest abschnittsweise eine Durchmischung des ersten Schleifkorns (14) und des zweiten Schleifkorns (20) gebildet ist.

2. Schleifschnecke nach Anspruch 1,
**dadurch gekennzeichnet, dass**
- der erste Abschnitt (12) und der zweite Abschnitt (18) durch Urformen miteinander verbunden worden sind,
- wobei der Übergangsabschnitt (22) eine stoffschlüssige Verbindung des ersten Abschnitts (12) mit dem zweiten Abschnitt (18) ausbildet.

3. Schleifschnecke nach einem der voranstehenden Ansprüche,
**dadurch gekennzeichnet, dass**
- der erste Abschnitt (12) ein gröberes Schleifkorn aufweist als der zweite Abschnitt (18)
oder
- der zweite Abschnitt (18) ein gröberes Schleifkorn aufweist als der erste Abschnitt (12).

4. Schleifschnecke nach einem der voranstehenden Ansprüche,
**dadurch gekennzeichnet, dass**
- das erste Schleifkorn ein Schleifkorngemisch ist
und/oder
- das zweite Schleifkorn kann ein Schleifkorngemisch ist.

5. Schleifschnecke nach einem der voranstehenden Ansprüche,
**dadurch gekennzeichnet, dass**
- das erste Schleifkorn aus Korund besteht
oder
- das erste Schleifkorn aus Siliziumkarbid besteht oder
- das erste Schleifkorn aus kubischem Bornitrid besteht
oder
- das erste Schleifkorn aus synthetischem Diamant besteht
oder
- das erste Schleifkorn aus einem Gemisch von Schleifkörnen, bestehend aus zwei oder mehr der Materialien Korund, Siliziumkarbid, kubisches Bornitrid, synthetischer Diamant besteht.

6. Schleifschnecke nach einem der voranstehenden Ansprüche, **dadurch gekennzeichnet, dass**
- das zweite Schleifkorn aus Korund besteht
oder
- das zweite Schleifkorn aus Siliziumkarbid besteht
oder
- das zweite Schleifkorn aus kubischem Bornitrid besteht
oder
- das zweite Schleifkorn aus synthetischem Diamant besteht
oder
- das zweite Schleifkorn aus einem Gemisch von Schleifkörnen, bestehend aus zwei oder mehr der Materialien Korund, Siliziumkarbid, kubisches Bornitrid, synthetischer Diamant besteht.

7. Schleifschnecke nach einem der voranstehenden Ansprüche,
**dadurch gekennzeichnet, dass**
die Schleifschnecke (10) eine keramisch gebundene Schleifschnecke (10) ist.

8. Schleifschnecke nach einem der voranstehenden Ansprüche,
**dadurch gekennzeichnet, dass**
der Matrixwerkstoff eines oder mehrere der nachfolgenden Materialien aufweist:
Ton, Kaolin, Feldspat, Quarz und Porzellanmehl, Kalkspat, Eisenoxid, Glasfritten.

9. Schleifschnecke nach einem der voranstehenden Ansprüche,
**dadurch gekennzeichnet, dass**
die Schleifschnecke keine galvanisch belegte Schleifschnecke ist.

10. Schleifschnecke nach einem der voranstehenden Ansprüche,
**dadurch gekennzeichnet, dass**
- der erste Abschnitt eine erste abgerichtete Profilform (38) aufweist und
- der zweite Abschnitt eine zweite abgerichtete Profilform (40) aufweist,
- wobei sich die Geometrie der ersten abgerichteten Profilform (38) von der Geometrie der zweiten abgerichteten Profilform (40) unterscheidet,
- wobei die Schleifschnecke (10) zum topologischen Schleifen einer Verzahnung (34) eingerichtet ist.

11. Verfahren, mit den Verfahrensschritten:
- Bereitstellen von erstem Schleifkorn (14);
- Bereitstellen von zweitem Schleifkorn (20);
- Bereitstellen eines Matrixwerkstoffs (16);
- Mischen des ersten Schleifkorns (14) mit dem Matrixwerkstoff (16) zu einer ersten Mischung (M1);
- Mischen des zweiten Schleifkorns (20) mit dem Matrixwerkstoff (16) zu einer zweiten Mischung (M2);
- Schichten der ersten Mischung (M1) und der zweiten Mischung (M2) in einer Form (26),
- Pressen der ersten Mischung (M1) und der zweiten Mischung (M2) innerhalb der Form (26) und Sintern der ersten und zweiten Mischung zu einem zylindrischen Rohling (28);
- Herstellung einer Schleifschnecke (10) durch Profilieren des Rohlings (28);
- wobei die Schleifschnecke (10) gemäß einem der Ansprüche 1 bis 10 ausgebildet ist.

12. Verfahren, mit den Verfahrensschritten:
- Bereitstellen einer Schleifschnecke (10) gemäß einem der Ansprüche 1 - 10;
- Bereitstellen eines Bauteils (32), das eine zu schleifende Verzahnung (34) aufweist;
- Schleifen der Flanken (36) der Verzahnung (34) mittels des ersten Abschnitts (12);
- Schleifen der Flanken (36) der Verzahnung (34) mittels des zweiten Abschnitts (18).

13. Verfahren nach Anspruch 12,
**dadurch gekennzeichnet, dass**
- die Schleifschnecke nach Anspruch 10 ausgebildet ist und
- das Schleifen der Flanken (36) der Verzahnung (34) ein topologisches Schleifen ist.
